(19) Europäisches Patentamt
European Patent Office
Office européen des brevets

(11) Veröffentlichungsnummer : **0 416 376 B1**

# (12) EUROPÄISCHE PATENTSCHRIFT

(45) Veröffentlichungstag der Patentschrift : **15.09.93 Patentblatt 93/37**

(51) Int. Cl.[5] : **C08G 77/448,** C08G 77/445

(21) Anmeldenummer : **90116130.7**

(22) Anmeldetag : **23.08.90**

## (54) Thermoplastische Polyestercarbonat-Polysiloxan-Blockcopolymere.

(30) Priorität : **05.09.89 DE 3929401**

(43) Veröffentlichungstag der Anmeldung : **13.03.91 Patentblatt 91/11**

(45) Bekanntmachung des Hinweises auf die Patenterteilung : **15.09.93 Patentblatt 93/37**

(84) Benannte Vertragsstaaten : **DE ES FR GB IT NL**

(56) Entgegenhaltungen :
**EP-A- 0 073 067**
**EP-A- 0 146 827**
**EP-A- 0 149 789**
**EP-A- 0 368 104**
**DE-A- 2 640 241**
**US-A- 3 379 790**

(73) Patentinhaber : **BAYER AG**
**D-51368 Leverkusen (DE)**

(72) Erfinder : **Serini, Volker, Dr.**
**Sebastian-Kneipp-Weg 2**
**D-4150 Krefeld (DE)**
Erfinder : **Rathmann, Dietrich, Dr.**
**Alte Landstrasse 119**
**D-5090 Leverkusen (DE)**
Erfinder : **Morbitzer, Leo, Dr.**
**Rungestrasse 50**
**D-5000 Köln 80 (DE)**
Erfinder : **Freitag, Dieter, Dr.**
**Hasenheide 10**
**D-4150 Krefeld (DE)**
Erfinder : **Grigo, Ulrich, Dr.**
**Michelsheide 9**
**D-4152 Kempen 3 (DE)**

**EP 0 416 376 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue thermoplastische Polyestercarbonat-Polysiloxan-Blockcopolymere mit verbesserter Benzinbeständigkeit sowie deren Verwendung zur Herstellung von Formkörpern.

Aus der DE-OS 33 44 911 sind Siloxan-Polyestercarbonat-Blockcopolymere bekannt, die ein gutes technisches Wärmestandniveau sowie eine bessere thermoplastische Verarbeitbarkeit aufweisen als die nichtmodifizierten aromatischen Polyestercarbonate.

In der DE-OS 26 40 241 werden Polyestercarbonat-Polysiloxan-Blockcopolymere beschrieben, die 45 bis 60 Gew.-% Polysiloxanblöcke enthalten. Diese Polymeren besitzen jedoch ein nicht befriedigendes technisches Wärmestandfestigkeitsniveau.

Gegenstand der vorliegenden Erfindung sind Polyestercarbonat-Polysiloxan-Blockcopolymere mit wiederkehrenden Struktureinheiten

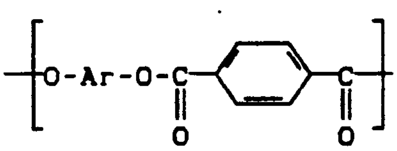

(1)

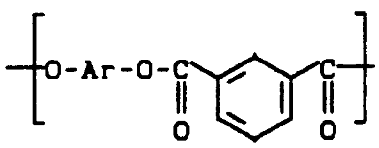

(2)

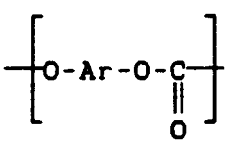

(3)

und

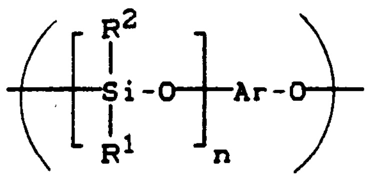

(4),

worin

$R^1$ und $R^2$ gleich oder verschieden sind und für gegebenenfalls durch Halogen substituiertes $C_1$-$C_{20}$-Alkyl, $C_2$-$C_6$-Alkenyl, $C_6$-$C_{14}$-Aryl, $C_7$-$C_{15}$-Aralkyl oder $C_7$-$C_{15}$-Alkaryl stehen, wobei jede

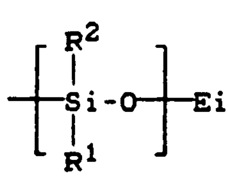
Einheit

unterschiedlich durch

$R^1$ und $R^2$ substituiert sein kann,

Ar einen ein- oder mehrkernigen aromatischen Rest mit 6 bis 30 C-Atomen bedeutet,

n eine ganze Zahl von 5 bis 200 darstellt und

worin die Struktureinheiten (1) und (2) 5 bis 98 Gew.-% der Summe der Struktureinheiten (1), (2) und (3) und die Struktureinheiten (4) 0,1 bis 40 Gew.-% der Summe der Struktureinheiten (1), (2), (3) und (4) ausmachen, die dadurch gekennzeichnet sind, daß die Struktureinheiten (2) 75 bis 100 Gew.-% der Summe der Struktureinheiten (1) und (2) betragen.

Die untere Grenze von n beträgt bevorzugt 10, besonders bevorzugt 20, ganz besonders bevorzugt 30 und insbesondere 40. Die obere Grenze von n beträgt bevorzugt 150, besonders bevorzugt 100, ganz besonders bevorzugt 80 und insbesondere 45.

Die untere Grenze der Summe der Struktureinheiten (1) und (2) beträgt bevorzugt 10 Gew.-%, besonders bevorzugt 20 Gew.-%, ganz besonders bevorzugt 45 Gew.% und insbesondere 70 Gew.-% der Summe der Struktureinheiten (1), (2) und (3). Die obere Grenze der Summe der Struktureinheiten (1) und (2) beträgt bevorzugt 95 Gew.-%, besonders bevorzugt 90 Gew.% und ganz besonders bevorzugt 85 Gew.% der Summe der Struktureinheiten (1), (2) und (3).

Die Struktureinheiten (4) betragen bevorzugt 0,3-30 Gew.-%, besonders bevorzugt 0,6-15 Gew.-%, ganz besonders bevorzugt 1-8 Gew.-% und insbesondere 2-7 Gew.-% der Summe der Struktureinheiten (1), (2), (3) und (4).

Die untere Grenze an Struktureinheiten (2) beträgt bevorzugt 80 Gew.-% und besonders bevorzugt 85 Gew.-% der Summe der Struktureinheiten (1) und (2).
Die obere Grenze an Struktureinheiten der Formel (2) beträgt bevorzugt 95 Gew.-% und besonders bevorzugt 90 Gew.-% der Summe der Struktureinheiten (1) und (2).

Als Reste Ar der zuvor genannten wiederkehrenden Struktureinheiten kommen solche in Frage, die aromatischen Dihydroxyverbindungen zugrundeliegen, wie Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, $\alpha,\alpha'$-Bis-(hydroxyphenyl)-isopropylbenzole, Pentamethyl-(hydroxyphenyl)-indanole sowie entsprechende kernsubstituierte Verbindungen. Diese und weitere geeignete aromatische Dihydroxyverbindungen sind z.B. in der Monographie von H. Schnell, Chemistry and Physics of Polycarbonates, Polymer Reviews 9, Interscience Publishers, New York 1964, in der Veröffentlichung von V. Serini, D. Freitag und H. Vernaleken, Polycarbonate aus o,o,o',o'-tetramethylsubstituierten Bisphenolen, Angewandte Makromolekulare Chemie 55 (1976) 175 bis 189 sowie in den US-PS 3 028 365, 2 999 835, 3 148 172, 3 271 368, 2 991 273, 3 271 367, 3 780 078, 3 014 891 und 2 999 846, in den DT-OS 1 570 703, 2 063 050, 2 063 052, 2 211 957, 2 402 175, 2 402 176, 2 402 177 und in der FR-PS 1 561 518 beschrieben.

Bevorzugt werden folgende aromatische Dihydroxyverbindungen genannt: Hydrochinon, Bis-(4-hydroxyphenyl), 2,2-Bis-(4-hydroxyphenyl)-propan, Bis-(4-hydroxyphenyl)-sulfid, Bis-(4-hydroxyphenyl)-ether, Bis-(4-hydroxyphenyl)-keton, Bis-(4-hydroxyphenyl)-sulfon, Bis-(4-hydroxyphenyl)-methan, 1,1-Bis-(4-hydroxyphenyl)-cyclohexan, $\alpha,\alpha'$-Bis-(4-hydroxyphenyl)-p-diisopropylbenzol, 1,1-Bis-(4-hydroxyphenyl)-1-phenyl-ethan, 2,2-Bis-(3-methyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 2,2-Bis(3,5-dimethyl-4-hydroxyphenyl)-propan, Bis-(3,5-dimethyl-4-hydroxyphenyl)-methan, 2,2-Bis-(3,5-dimethyl-4-hydroxyphenyl)-butan und Bis-(3,5-dimethyl-4-hydroxyphenyl).

Besonders bevorzugt werden genannt: Bis-(4-hydroxyphenyl), 2,2-Bis-(4-hydroxyphenyl)-propan und 2,2-Bis-(3,5-dimethyl-4-hydroxyphenyl)-propan, wobei 2,2-Bis-(4-hydroxyphenyl)-propan ganz besonders bevorzugt ist.

Als Reste $R^1$ und $R^2$ werden bevorzugt $C_1$-$C_6$-Alkyl, $C_2$-$C_8$-Alkenyl, $C_6$-$C_{10}$-Aryl, $C_7$-$C_{12}$-Aralkyl und $C_7$-$C_{12}$-Alkaryl genannt. Die genannten Reste können ganz oder teilweise durch Halogen, wie Fluor, Chlor oder Brom, bevorzugt Fluor und Chlor, besonders bevorzugt Fluor, substituiert sein. Bevorzugt werden folgende Reste $R^1$ und $R^2$ genannt: Methyl, Ethyl, Propyl, n-Butyl, tert.-Butyl, Vinyl, Phenyl, Naphthyl, Chlormethyl, 3,3,3-Trifluorpropyl, Perfluorbutyl und Perfluoroctyl, besonders bevorzugt Methyl und Phenyl, ganz besonders bevorzugt Methyl.

Die erfindungsgemäßen Polyestercarbonat-Polysiloxan-Blockcopolymere können nach Verfahren hergestellt werden, wie sie für die Polyestercarbonat-Herstellung aus der Literatur bekannt sind, so z.B. nach Schmelzumesterungsverfahren, nach Verfahren in homogener Lösung und nach Zweiphasengrenzflächenverfahren. Bevorzugt werden Zweiphasengrenzflächenverfahren angewandt (s. EP 0 036 080, V. V. Korshak und S. V. Vinograda, Polyesters, Pergamon Press, 1965, S. 448).

Als Ausgangskomponenten für die Herstellung der erfindungsgemäßen Polyestercarbonat-Polysiloxan-Blockcopolymeren nach dem Zweiphasengrenzflächenverfahren werden bevorzugt aromatische Dihydroxyverbindungen, Terephthelsäuredichlorid und/oder Isophthalsäuredichlorid, Phosgen und Polydiorganosiloxane mit Hydroxyaryloxy-Endgruppen eingesetzt. Dabei ist es möglich, unterschiedlich substituierte Polydiorganosiloxane im Gemisch einzusetzen. Solche Polydiorganosiloxane mit Hydroxyaryloxy-Endgruppen werden z.B. in der DE-OS 33 34 782 beschrieben.

Auch der Einsatz von Terephthalsäure und Isophthalsäure ist beim Zweiphasengrenzflächenverfahren möglich, wobei intermadiär mit Hilfe von Phosgen Dicarbonsäurachloride bzw -dichloride gebildet werden Ebenso ist der Einsatz von Polydiorganosiloxanen möglich, die

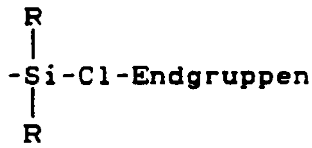

aufweisen. Ebenso können Bischlorkohlensäureester der aromatischen Dihydroxyverbindungen zum Einsatz kommen.

Die erfindungsgemäßen Polyestercarbonat-Polysiloxan-Copolymere können anstatt Terephthalsäure und/oder Isophthalsäure bis zu 30 Mol-% andere Dicarbonsäuren, insbesondere aromatische Dicarbonsäuren, wie tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4',5-dicarbonsäure oder Naphthalindicarbonsäure cokondensiert enthalten, bezogen auf die Summe der Dicarbonsäuren, Ebenso können sie bis zu 40 Mol-% Hydroxycarbonsäuren, insbesondere aromatische Hydroxycarbonsäuren, wie p-Hydroxybenzoesäure oder Hydroxynaphthoesäuren einkondensiert enthalten, bezogen auf die Summe der aromatischen Dicarbonsäuren.

Die erfindungsgemäßen Polyestercarbonat-Polysiloxan-Blockcopolymeren können in üblicher Weise abgemischt werden mit mindestens einem Polymeren aus der Gruppe der aromatischen Polyestercarbonate, aromatischen Polyester und aromatischen Polycarbonate. Der Anteil der den erfindungsgemäßen Blockcopolymeren zugemischten oben erwähnten Polymeren ist dabei zweckmäßigerweise so zu bemessen, daß das Eigenschaftsbild der erfindungsgemäßen thermoplastischen Polyestercarbonat-Polysiloxan-Blockcopolymeren nicht wesentlich geändert wird. Üblicherweise beträgt der Anteil der zugemischten Polymeren ca. 97 bis 1 Gew.-%, besonders bevorzugt 90 bis 1 Gew.-%, bezogen auf die Gesamtmischung. Bevorzugt wird der Anteil der erwähnten Polymeren so bemessen, daß die Summe der Einheiten (1), die Summe der Einheiten (2), die Summe der Einheiten (3) und die Summe der Einheiten (4) in den Mischungen unter die erfindungsgemäßen Grenzen der Polyestercarbonat-Polysiloxan-Blockcopolymeren fällt.

Die Polykondensation erfolgt beim Zweiphasengrenzflächenverfahren in einem Zweiphasensystem aus wäßriger Alkalilösung und mit Wasser nicht mischbarem organischem Lösungsmittel. Die Polykondensation wird im allgemeinen mit Hilfe eines Katalysators durchgeführt. Gegebenenfalls wird die Polykondensation in Gegenwart von Kettenbegrenzern, Verzweigern und Antioxidantien durchgeführt.

Als mit Wasser nicht mischbare organische Lösemittel können beispielsweise chlorierte Kohlenwasserstoffe, wie Chloroform, Dichlorethan, Tri- und Tetrachlorethylen, Tetrachlorethan, Dichlormethan, Chlorbenzol und Dichlorbenzol, aber auch nicht chlorierte Kohlenwasserstoffe, wie Toluol und Xylol eingesetzt werden. Bevorzugt werden Chlorbenzol oder Dichlormethan oder Mischungen von beiden verwendet.

Als Kettenbegrenzer werden Verbindungen eingesetzt, wie sie von Polycarbonaten, Polyestern und Polyestercarbonaten her bekannt sind, so z.B. sekundäre Amine, Phenole und Säurechloride. Bevorzugt werden verwendet Phenole, wie beispielsweise Phenol, Alkylphenole, bevorzugt mit $C_1$-$C_{12}$-Alkylgruppen, wie p-tert.-Butylphenol, m- und p-3,5-dimethyl-heptyl-phenol und m- und p-1,1,3,3-tetramethylbutylphenol, Hydroxydiphenyl und p-Cumylphenol. Besonders bevorzugt wird das p-1,1,3,3-Tetramethylbutylphenol (p-Isooctylphenol) eingesetzt.

Als Verzweiger lassen sich mindestens trifunktionelle Verbindungen einsetzen. Solche Verzweiger sind bekannt (s. EP 00 36 080, DE-OS 3 506 472, DE-OS 2 615 038) und werden im allgemeinen in Mengen von ca. 0,01 bis 3 Mol-%, bezogen auf eingesetzte aromatische Dihydroxyverbindungen, eingesetzt.

Als Katalysatoren können insbesondere tertiäre Amine und Phasentransferkatalysatoren wie quartäre Ammonium- und Phosphoniumverbindungen sowie Kronenether eingesetzt werden. Bevorzugte Katalysatoren sind beispielsweise N-Ethylpiperidin, Tetrabutylammoniumbromid und/oder Triphenylbenzylphosphoniumbromid.

Die erfindungsgemäßen Polyestercarbonat-Polysiloxan-Blockcopolymeren weisen im allgemeinen relative Viskositäten ($\eta$rel) von ca. 1,10 bis 5,0, bevorzugt von 1,15 bis 3,0, besonders bevorzugt von 1,18 bis 1,60, ganz besonders bevorzugt von 1,20 bis 1,50 und insbesondere von 1,24 bis 1,40, auf, gemessen in Dichlormethan oder in Phenol/o-Dichlorbenzol (1/1 Gew-Teile) bei c = 5 g/l und 25° C.

Die erfindungsgemäßen Polyestercarbonat-Polysiloxan-Blockcopolymeren lassen sich zu Formkörpern hoher Zähigkeit gekoppelt mit hoher Benzinbeständigkeit, verarbeiten. Für Teile, die zäh und benzinbeständig sein müssen (Automobilteile unter der Motorhaube, Automobilaußenteile), sind die erfindungsgemäßen Polyestercarbonat-Polysiloxan-Blockcopolymeren besonders gut geeignet.

Die erfindungsgemäßen Polyestercarbonat-Polysiloxan-Blockcopolymeren können gegebenenfalls noch Farbstoffe, Pigmente, Entformungsmittel, Antistatika, Leitfähigkeitszusätze, Stabilisatoren, wie UV- und Oxidationsstabilisatoren, Flammschutzmittel, Füll- und Verstärkungsstoffe, oder andere Hilfsstoffe in üblichen Mengen eingemischt enthalten.

Im einzelnen können beispielsweise Graphit, Ruß, Metallfasern, Metallpulver, Kieselgur, Quarz, Kaolin, Glimmer, Tone, $CaF_2$, $CaCO_3$, Aluminiumoxide, Aluminiumnitrid, Silicate, Bariumsulfat, Glasfasern, C-Fasern, Keramik Fasern und anorganische und organische Pigmente zugesetz werden, sowie als Entformungsmittel beispielsweise Ester mehrwertiger Alkohole mit langkettigen Carbonsäuren wie Glycerinstearate, Pentaerythrittetrastearat und Trimethylolpropantristearat.

Die erfindungsgemäßen Polyestercarbonat-Polysiloxan-Blockcopolymeren weisen gegenüber den in der DE-OS 33 44 911 beschriebenen Blockcopolymeren eine bessere Benzinbeständigkeit auf.

Gegenüber den Polyestercarbonat-Polysiloxan-Blockcopolymeren der DE-OS 26 40 241 besitzen die erfindungsgemäßen Blockcopolymeren eine höhere Steifigkeit.

Beispiel 1

Polyestercarbonat-Polysiloxan-Blockcopolymer, enthaltend 5 Gew.-% Polysiloxan-Blöcke, Polyester-Anteil gleich 90 Gew.-% des Polyestercarbonat-Anteils, Isophthalatanteil gleich 80 Gew.-% des Polyesteranteils (APESI 90 I 80/Si 5).

In 100 kg destilliertem Wasser wurden 840 g NaOH (21 Mol) und 2283 g Bisphenol A (10 Mol) gelöst. Dazu wurden 85 kg Methylenchlorid gegeben, in denen 71 g p-Isooctylphenol (0,32 Mol) und 181 g eines Polydimethylsiloxans mit dem mittleren Polykondensationsgrad $\overline{P}_n = 65$ und mit Bisphenol A-Endgruppen (0,0357 Mol) gelöst enthalten waren. Unter Rühren wurden bei einer Temperatur von 25° C 351 g Terephthalsäuredichlorid (1,73 Mol) und 1407 g Isophthalsäuredichlorid (6,93 Mol), gelöst in 10 kg Methylenchlorid zugegeben. Dann wurde 30 Minuten bei 25° C weitergerührt. Anschließend wurden 1840 g NaOH (46 Mol), gelost in 8 kg destilliertem Wasser, zugesetzt und 495 g Phosgen (5 Mol) in 30 Minuten bei 25° C gleichmäßig zugesetzt. Dann wurde noch 30 Minuten bei 25° C weitergerührt.

Zur Aufarbeitung des gebildeten Polyestercarbonat-Polysiloxan-Blockcopolymers wurde die organische Phase aus dem Zweiphasengemisch abgetrennt und mit verdünnter wäßriger NaOH, verdünnter wäßriger $H_3PO_4$ und destilliertem Wasser gewaschen, bis das Waschwasser elektrolytfrei war. Das Polyestercarbonat-Polysiloxan-Blockcopolymer wurde dann nach Zugabe von Chlorbenzol zu der Methylenchlorid-Lösung in einem Kessel zu einer konzentrierten Lösung voreingedampft, aus der dann das Polyestercarbonat-Polysiloxan-Blockcopolymer durch Ausdampfextrusion als Granulat isoliert wurde. Die relative Viskosität des Granulats betrug $\eta rel = 1{,}288$, gemessen in $CH_2Cl_2$ bei 25° C, c = 5 g/l. Dieses Granulat wurde dann im Extrusionsspritzguß zu Prüfkörpern verarbeitet. Die an diesen Prüfkörpern erhaltenen Prüfergebnisse zur Benzinbeständigkeit sind in der folgenden Tabelle enthalten.

Beispiel 2

Polyestercarbonat-Polysiloxan-Blockcopolymer, enthaltend 5 Gew.-% Polysiloxan-Blöcke, Polyester-Anteil gleich 80 Gew.-% des Polyestercarbonat-Anteils, Isophthalatanteil gleich 85 Gew.-% des Polyesteranteils (APESI 80 I 85/Si 5)

Das APESI 80 I 85/Si 5 wurde wie in Beispiel 1, jedoch mit entsprechend der Polymerzusammensetzung geänderten Mengen der Reaktanden hergestellt. Die relative Viskosität des Granulats betrug $\eta_{rel} = 1{,}295$, gemessen wie in Beispiel 1. Prüfkörper und Prüfung wie in Beispiel 1 (siehe Tabelle).

Beispiel 3

Polyestercarbonat-Polysiloxan-Blockcopolymer, enthaltend 5 Gew.-% Polysiloxan-Blöcke, Polyester-Anteil gleich 70 Gew.-% des Polyestercarbonat-Anteils, Isophthalatanteil gleich 90 Gew.-% des Polyesteranteils (APESI 70 I 90/Si 5)

Das APESI 70 I 90/Si 5 wurde wie in Beispiel 1, jedoch mit entsprechend der Polymerzusammensetzung geänderten Mengen der Reaktanden, hergestellt. Die relative Viskosität das Granulats betrug $\eta_{rel} = 1{,}293$, gemessen wie in Beispiel 1. Prüfkörper und Prüfung wie in Beispiel 1 (siehe Tabelle).

Beispiel 4 (Vergleich)

Polyestercarbonat-Polysiloxan-Blockcopolymer, enthaltend 5 Gew.-% Polysiloxanblöcke, Polyester-Anteil gleich 90 Gew.-% des Polyestercarbonats, Isophthalatanteil gleich 50 Gew.-% des Polyesteranteils (APESI 90 I 50/SI 5).

Das APESI 90 I 50/Si 5 wurde wie das APESI 90 I 90/Si 5 in Beispiel 1, jedoch mit entsprechend der Polymerzusammensetzung geänderten Mengen der Reaktanden, hergestellt. Die relative Viskosität des Granulats betrug $\eta_{rel}$ = 1,290, gemessen wie in Beispiel 1. Prüfkörper und Prüfung wie in Beispiel 1 (siehe Tabelle).

Beispiel 5 (Vergleich)

Polyestercarbonat-Polysiloxan-Blockcopolymer, enthaltend 5 Gew.-% Polysiloxanblöcke, Polyester-Anteil gleich 80 Gew.-% des Polyestercarbonats, Isophthalatanteil gleich 50 Gew.-% des Polyesteranteils (APESI 80 I 50/Si 5).

Das APESI 80 I 50/Si 5 wurde wie das APESI 80 J 85/Si 5 in Beispiel 2, jedoch mit entsprechend der Polymerzusammensetzung geänderten Mengen der Reaktanden, hergestellt. Die relative Viskosität des Granulats betrug $\eta_{rel}$ = 1,296, gemessen wie in Beispiel 1. Prüfkörper und Prüfung wie in Beispiel 1 (siehe Tabelle).

Beispiel 6 (Vergleich)

Polyestercarbonat-Polysiloxan-Blockcopolymer, enthaltend 5 Gew.-% Polysiloxanblöcke, Polyester-Anteil gleich 70 Gew.-% des Polyestercarbonats, Isophthalsäureanteil gleich 50 Gew.-% des Polyesteranteils (APESI 70 I 50/Si 5).

Das APESI 70 I 50/Si 5 wurde wie das APESI 70 I 90/Si 5 in Beispiel 3, jedoch mit entsprechend der Polymerzusammensetzung geänderten Mengen der Reaktanden, hergestellt. Die relative Viskosität des Granulats betrug $\eta_{rel}$ = 1,290, gemessen wie in Beispiel 1. Prüfkörper und Prüfung wie in Beispiel 1.

Tabelle zu den Beispielen 1-6

Benzinbeständigkeit von Polyestercarbonat-Polysiloxan-Blockcopolymeren (APESI)

Die von den Granulaten der Beispiele 1-6 hergestellten Prüfkörper 80 x 10 x 4 (Maße in mm) wurden bei einer Randfaserdehnung von 3 % zwei Minuten lang in einem Toluol/Isooctan-Gemisch 1/1 Gewichtsteile (Benzinsimulanz) bei 25°C gelagert und dann einem Zugversuch unterworfen.

Zum Vergleich wurden auch die entsprechenden unbehandelten Prüfkörper demselben Zugversuch unterworfen. Die in den Zugversuchen ermittelten Reißfestigkeiten $\sigma$ der in Toluol/Isooctangemisch gelagerten Prüfkörper wurden zu den Reißfestigkeiten $\sigma o$ der unbehandelten Prüfkörper (Ausgangswerte) ins Verhältnis gesetzt. Je größer das Verhältnis $\sigma/\sigma o$ für ein APESI ist, desto größer ist die Benzinfestigkeit.

Es war überraschend, daß die erfindungsgemäßen APESI-Typen der Beispiele 1-3 bedeutend höhere Benzinfestigkeit aufweisen, als die verglichenen APESI-Typen der Beispiele 4-6 (APESI-Typen nach der DE-OS 3 344 911).

| Beispiel Nr. | Polymertyp | $\frac{\sigma}{\sigma o}$ (%) |
|---|---|---|
| 1 | APESI 90 I 80/Si 5 | 88 |
| 2 | APESI 80 I 85/Si 5 | 90 |
| 3 | APESI 70 I 90/Si 5 | 75 |
| 4 (Vergleich) | APESI 90 I 50/Si 5 | 8 |
| 5 (Vergleich) | APESI 80 I 50/Si 5 | 6 |
| 6 (Vergleich) | APESI 70 I 50/Si 5 | 6 |

**Patentansprüche**

1. Polyestercarbonat-Polysiloxan-Blockcopolymere mit wiederkehrenden Struktureinheiten

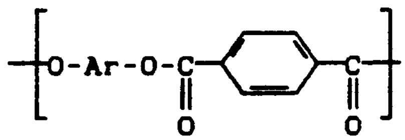

(1)

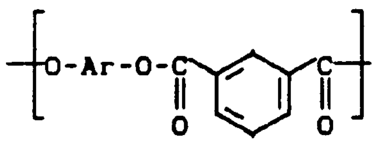

(2)

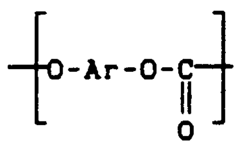

(3)

und

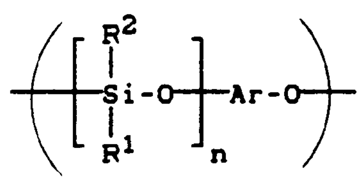

(4),

worin

$R^1$ und $R^2$ gleich oder verschieden sind und für gegebenenfalls durch Halogen substituiertes $C_1$-$C_{20}$-Alkyl, $C_2$-$C_6$-Alkenyl, $C_6$-$C_{14}$-Aryl, $C_7$-$C_{15}$-Aralkyl oder $C_7$-$C_{15}$-Alkaryl stehen und wobei jede

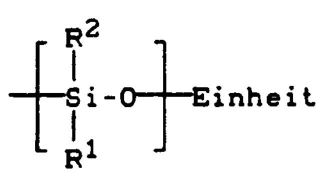

unterschiedlich durch $R^1$ und $R^2$ substituiert sein kann,

Ar einen ein- oder mehrkernigen aromatischen Rest mit 6 bis 30 C-Atomen bedeutet,

n eine ganze Zahl von 5 bis 200 darstellt und

worin die Struktureinheiten (1) und (2) 5 bis 98 Gew.-% der Summe der Struktureinheiten (1), (2) und (3) und die Struktureinheiten (4) 0,1 bis 40 Gew.-% der Summe der Struktureinheiten (1), (2), (3) und (4) ausmachen, dadurch gekennzeichnet, daß die Struktureinheiten (2) 75 bis 100 Gew.-% der Summe der Struktureinheiten (1) und (2) betragen.

2. 2. Verwendung der Polyestercarbonat-Polysiloxan-Blockcopolymeren gemäß Anspruch 1 zur Herstellung von Formkörpern.

## Claims

1. Polyester carbonate-polysiloxane block copolymers having the following recurrent structural units

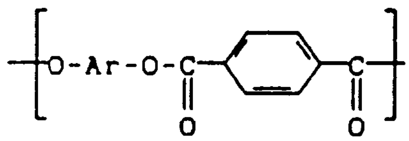

(1)

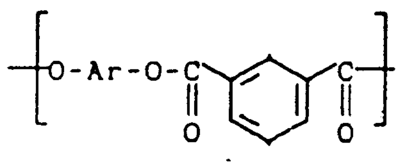

(2)

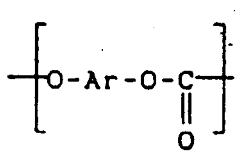

(3)

and

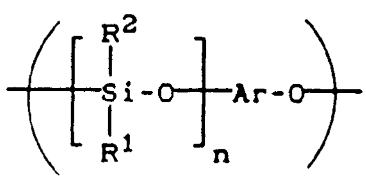

(4),

wherein

$R^1$ and $R^2$ are identical or different and stand for optionally halogen-substituted $C_1$-$C_{20}$-alkyl, $C_2$-$C_6$-alkenyl, $C_6$-$C_{14}$-aryl, $C_7$-$C_{15}$-aralkyl or $C_7$-$C_{15}$-alkaryl and each

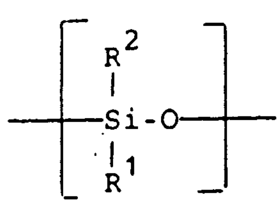

unit may carry different substituents denoted by $R^1$ and $R^2$,

Ar denotes a mononuclear or polynuclear aromatic group having 6 to 30 carbon atoms and

n denotes an integer with a value from 5 to 200 and the structural units (1) and (2) amount

to 5 to 98% by weight of the sum of the structural units (1), (2) and (3) while the structural units (4) amount to 0.1 to 40% by weight of the sum of the structural units (1), (2), (3) and (4), characterised in that the structural units (2) amount to 75 to 100% by weight of the sum of the structural units (1) and (2).

2. Use of the polyester carbonate-polysiloxane block copolymers according to Claim 1 for the manufacture of moulded products.

## Revendications

1. Copolymères séquencés polyestercarbonate-polysiloxane présentant des motifs structuraux récurrents

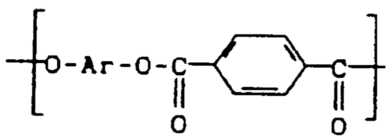

(1)

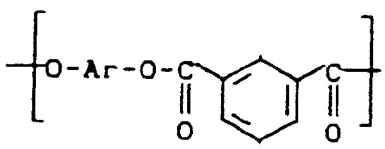

(2)

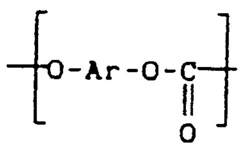

(3)

et

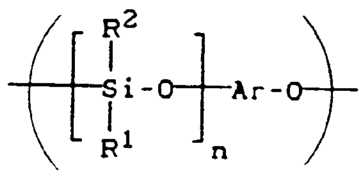

(4),

ou

$R^1$ et $R^2$ sont identiques ou différents et représentent un groupe alkyle en $C_1$ à $C_{20}$, alcényle en $C_2$ à $C_6$, aryle en $C_6$ à $C_{14}$, aralkyle en $C_7$ à $C_{15}$ ou alkaryle en $C_7$ à $C_{15}$ éventuellement substitué par un halogène et chaque motif

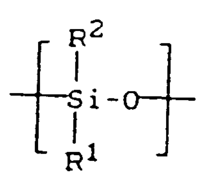

peut être substitué différemment par $R^1$ et $R^2$,

Ar représente un reste aromatique à un seul ou plusieurs noyaux, ayant 6 à 30 atomes de carbone,

n est un nombre entier de 5 à 200 et

les motifs structuraux (1) et (2) constituent 5 à 98 % en poids de la somme des motifs structuraux (1), (2) et (3) et les motifs structuraux (4) constituent 0,1 à 40 % en poids de la somme des motifs structuraux (1), (2), (3) et (4), caractérisés en ce que les motifs structuraux (2) représentent 75 à 100 % en poids de la somme des motifs structuraux (1) et (2).

**2.** Utilisation des copolymères du type polyestercarbonate-polysiloxane suivant la revendication 1 pour la production de corps façonnés.